# EUROPEAN PATENT SPECIFICATION

(11) **EP 3 019 719 B1**
(45) Date of publication and mention of the grant of the patent: **01.08.2018**
(21) Application number: 14822827.3
(22) Date of filing: 14.07.2014
(51) Int. Cl.: F01P 7/14, F16K 11/00, F16K 31/04, B60H 1/00, F16K 11/085

(54) **AN AUTOMATIC TEMPERATURE CONTROL DEVICE FOR AN INTERNAL COMBUSTION ENGINE**
AUTOMATISCHE TEMPERATURSTEUERUNGSVORRICHTUNG FÜR EINEN VERBRENNUNGSMOTOR
DISPOSITIF DE RÉGULATION AUTOMATIQUE DE TEMPÉRATURE POUR MOTEUR À COMBUSTION INTERNE

(30) Priority: 12.07.2013 IN 2104DE2013
(43) Date of publication of application: 18.05.2016
(73) Proprietor: Padmini VNA Mechatronics Pvt. Ltd., Haryana 122 001 (IN)
(72) Inventor: BHANDARI, Kabir, Gurgaon Haryana 122 001 (IN); KUMAR, Amardip, Gurgaon Haryana 122 001 (IN); KUMAR, Varun, Gurgaon Haryana 122 001 (IN)
(74) Representative: Ellmeyer, Wolfgang
(86) International application number: PCT/IB2014/063086
(87) International publication number: WO 2015/004646

(56) References cited:
- EP-A2- 1 270 893
- US-A1- 2013 014 911
- US-B1- 6 539 899
- US-B2- 7 658 177
- US-B2- 8 267 119

## Description

### FIELD OF THE INVENTION

The present invention relates to a novel device for automatic temperature control in an internal combustion engine of a motor vehicle. More particularly, this invention relates to a motorized water valve driven through the Electrical Control Unit (ECU) wherein the water valve is used to precisely control the engine cylinder at its most efficient temperature.

### BACKGROUND OF THE INVENTION

A very high temperature (up to 2000° C) is produced during fuel combustion in an internal combustion engine. This high temperature is very harmful for the normal working of the engine and is therefore cooled down to operating temperature for a precise working. Various methods for controlling the engine temperature and smooth functioning of engine are used from time to time. Thermo-Syphon was the first water based cooling method used for the cooling of engine temperature. The working includes the collection of heated water into a collecting pipe in the upper part of radiator, which is then cooled by a fan assisted wind streaming around the radiator. The cooled water drops down back into the engine, flow of water continues as long as the engine runs and the temperature control is not at efficient level. However it also suffers from drawback of long warm-up period and low engine temperature during the cold season. Document US6539899 discloses a rotary selecting valve for cooling an internal combustion engine. With advancement in engine technology coolant control or thermostat control methods are used for engine cooling. The temperature of the water circulating through the radiator is controlled depending on the coolant temperature. The thermostat controlled cooling system has advantage of short warm-up period and maintenance of a constant operating temperature. Nowadays maintaining operational temperature of engine is important not only for smoother working of engine, power output and fuel consumption, but it is also essential for low pollutant emission. Therefore, there is a need of reliable and efficient engine cooling system with new modifications.

Electronically controlled cooling system is developed to set the operating temperature of the engine to a specified value depending on the load state. Electrical control unit is a type of electronic unit that controls a series of actuators on an internal combustion engine to ensure the optimum running. A multitude of sensors in the engine bay send command to the ECU, which interpret the data and adjust the engine mechanism accordingly. The ECU has the capability to receive and process information hundreds of time per second.

However, the conventional system for cooling engine cylinder suffers with problems of long-warm up time, inefficient cooling, more fuel consumption, and less power saving. The cooling capacity of an engine is speed dependent and therefore, it is not possible to maintain the constant operating temperature by the conventional engine cooling system. Hence, a cooling system which reduces the long-warm up time and maintains the constant temperature throughout the journey is desirable.

Therefore, there is a need of a reliable and efficient cooling system for internal combustion engine which is fuel efficient, energy efficient, low power consumption and has minimal chances of mechanical failure.

### OBJECT OF THE INVENTION

The main object of this invention is to provide a novel device for automatic temperature control in an internal combustion engine.

Yet another object of this invention is to provide an ECU controlled valve having a modified structure which streamlines the construction and improves durability of the valve while eliminating thermal in-efficiency.

Yet another object of this invention is to provide a novel device for automatic temperature control which is controlled through ECU.

Yet another object of this invention is to provide a robust mechanical design of motorized water valve of a motor vehicle.

Yet another object of this invention is to obviate the conventional sealing system of the device.

Yet another object of this invention is to provide a robust design which control via Local Interconnect Network (LIN) or Pulse Width Modulation (PWM) interface.

Yet another object of this invention is to provide a novel device to precisely control the engine cylinder at its most efficient temperature.

Yet another object of this invention is to provide a novel device for automatic temperature control in an internal combustion engine with reduced warm-up time.

Yet another object of this invention is to provide a novel device for automatic temperature control in an internal combustion engine with less pollutant emissions.

Yet another object of this invention is to provide a novel device for automatic temperature control in an internal combustion engine with better fuel economy and power efficiency.

### SUMMARY OF THE INVENTION

The present invention relates to a novel device for automatic temperature control in an internal combustion engine of a motor vehicle according to claim 1 and to a method of automatic temperature control in an internal combustion engine, according to claim 6.

### BRIEF DESCRIPTION OF THE DRAWING

FIG. 1 is a cross-section view of a motorized water valve in accordance with the present invention.
FIG. 2 is a plan view of a motorized water valve in accordance with the present invention.
FIG. 3 is a plan view of a rotor element in accordance with the present invention.
FIG. 4 is cross-section view of rotating valve showing no rubber sealing or Lip Seal between the actuator and the rotating valve.
FIG. 5 is a motorized water valve in accordance with the present invention.
FIG. 6 is an exploded view of the motorized water valve in accordance with the present invention.

### DESCRIPTION OF THE PREFERRED EMBODIMENT

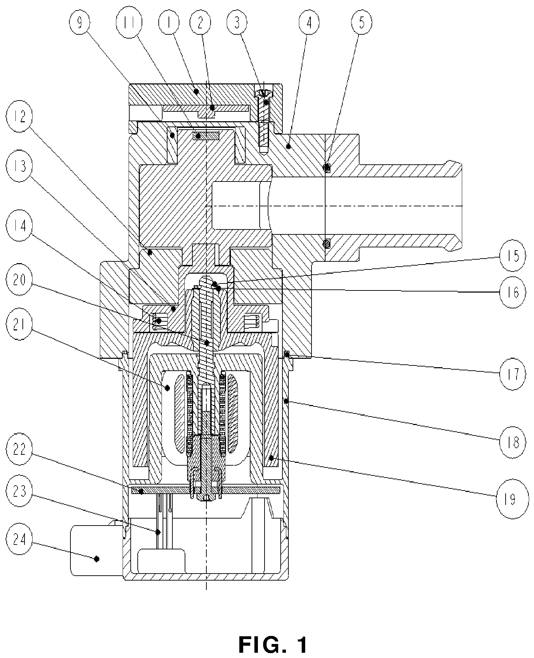

A novel automatic temperature control water valve according to the present invention, as shown in FIG. 1, solves the aforementioned disadvantages of conventional thermally controlled valves, and be provided in cooling water systems for internal combustion engines to regulate the flow of cooling water.

With reference to **FIG. 1****,** a motorized water valve supplies coolant to an internal combustion engine via various ports which connect the pump outlet to the engine. The motorized water valve is comprised of a non-magnetic housing assembly **18,** fastened to a rotor assembly, and an electromagnetic assembly.

The housing assembly **18** includes a substantially horizontal placed PCB **22** which is electrically connected to the Stator **21** to complete the electromagnetic circuit. The lower portion of housing **18** is fastened with the cover **24.** The terminal **23** is attached with the cover **24** at one end and is electrically connected with Stator **21** and PCB **22** at other end. The housing assembly **18** is further supported by a Magnetic Impeller **19,** a washer **16** and circular clip **15** on the other side in the housing **18.**

The rotor assembly includes a rotor casing **4,** an insert bush **9** and a sensor magnet inserted into the rotor **10** mechanically to make a sub assembly then the sub assembly is inserted into the rotor casing **4.** The rotor assembly further includes a Guiding Bush **12,** a Spring Holder **13** and a Torsion Spring **14.**

The Electromagnetic Assembly includes the rotor casing Assembly and Insert O-Ring **17** for external Sealing, a Screw Nozzle Inlet **6,** a Nozzle Outlet **8,** a Nozzle bypass **7** are screwed with the Rotor Casing **4.** The O-Ring **5** is placed inside the Rotor Casing **4** and nozzle during assembly. The other PCB **2** assembled within the cap **1** and screwed on the rotor casing **4.** Through this arrangement the PCB **2** senses the magnet **11** and gives feedback to the ECU about the position of the valve while operating condition.

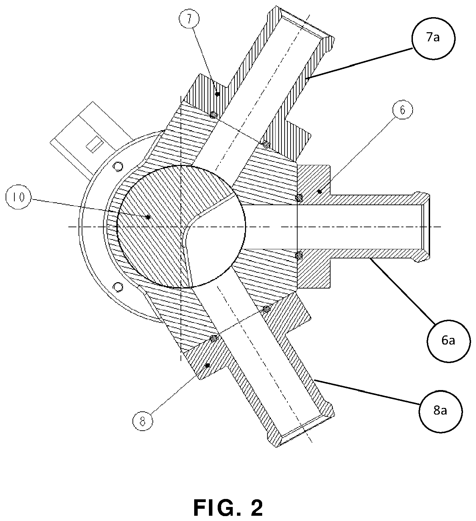

As shown in **FIG. 2****,** a plan view of a motorized water valve in accordance with the present invention is illustrated. The said motorized water valve comprises three ways opening port viz. Nozzle Inlet **6,** Nozzle Bypass **7,** and Nozzle Outlet **8.** This includes an inlet port **6a,** a main flow port **8a** and a bypass port **7a** for supplying coolant to the engine. The motorized valve is driven through ECU which controls the ON and OFF condition of motorized water valve. The opening of valve can be customized as per the requirement. Therefore, the system works as a control valve/Progressive valve and control the coolant flow with the same valve. During off condition the valve is closed with the help of Torsion Spring

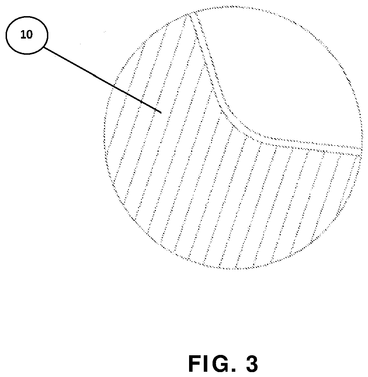

As shown in **FIG. 3****,** a plan view of a rotor element in accordance with the present invention is illustrated. The rotor **10** is the moving part of a rotary electric motor, electric generator or alternator, which rotates because the wires and magnetic field of the motor are arranged so that a torque is developed about the rotor's axis. When Rotor **10** rotates the input flow will be diverted to the Bypass port **7** and the Outlet port **8** will be closed consequently. It will work as a three way valve.

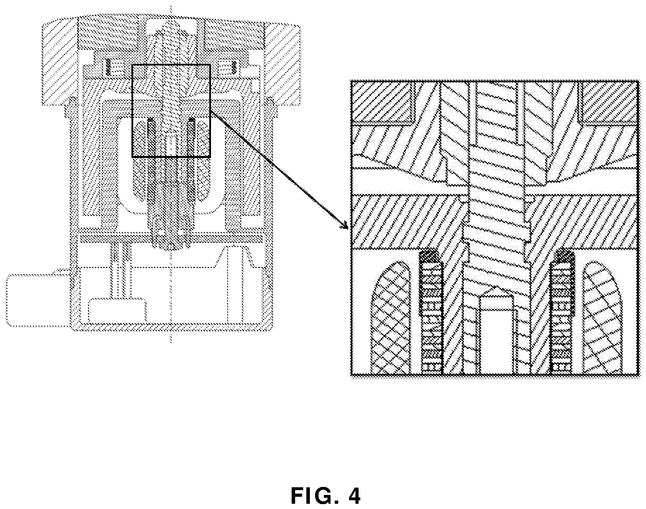

As shown in **FIG. 4****,** a cross-section view of rotating valve showing no rubber sealing or Lip Seal between the actuator and the rotating valve is illustrated. The present invention is to obviate the conventional sealing system of the device.

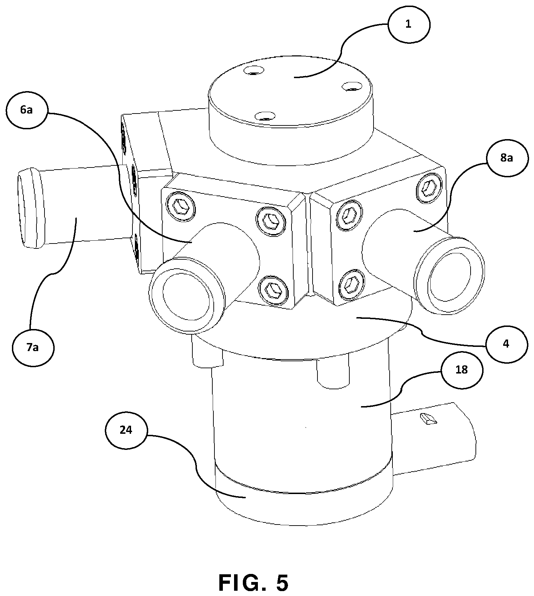

As shown in **FIG. 5****,** a motorized water valve in accordance with the present invention is illustrated. The motorized water valve comprises three ways opening port **6a, 7a** and **8a.** The motorized valve is driven through ECU which controls the ON and OFF condition of motorized water valve. The opening of valve can be customized as per the requirement. Therefore, the system works as a control valve/Progressive valve and control the coolant flow with the same valve. During off condition the valve is closed with the help of Torsion Spring

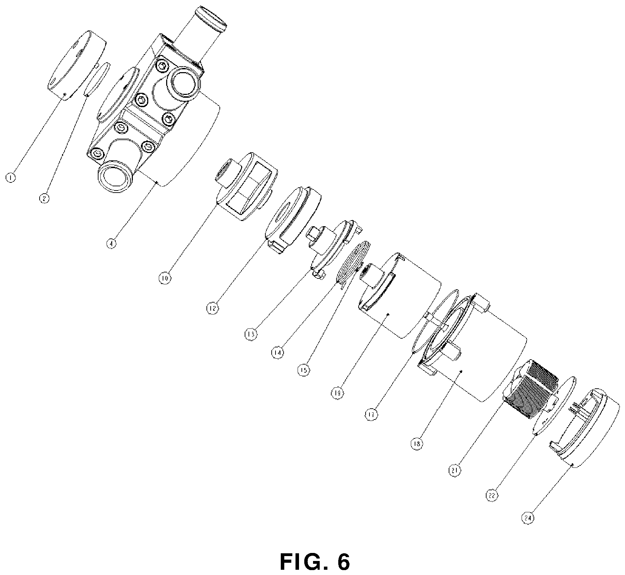

As shown in **FIG. 6****,** an exploded view of the motorized water valve in accordance with the present invention is illustrated.

While the best mode has been described in detail, those familiar with the art will recognize various alternative designs and embodiments within the scope of the following claims. Where one or more embodiments have been described as providing advantages or being preferred over other embodiments and/or over prior art in regard to one or more desired characteristics, one of ordinary skill in the art will recognize that compromises may be made among various features to achieve desired system attributes, which may depend on the specific application or implementation. These attributes include, but are not limited to: cost, strength, durability, life cycle cost, marketability, appearance, packaging, size, serviceability, weight, manufacturability, ease of assembly, etc. The embodiments described as being less desirable relative to other embodiments with respect to one or more characteristics are not outside the scope of the disclosure as claimed.

## Claims

1. An automatic temperature control device for an internal combustion engine comprising:
an engine cylinder;
an electrical control unit (ECU); and a motorized water valve driven through the electrical control unit (ECU), wherein the motorized water valve is used to control the temperature of the engine cylinder, the motorized water valve comprising a non-magnetic housing assembly (18);
a rotor casing assembly (4) fastened to the housing assembly (18); and an electromagnetic assembly, comprising the rotor casing assembly (4) and an insert O-ring (17) for external sealing, wherein
said rotor casing assembly comprises an inlet port (6a), a main flow port (8a) and a bypass port (7a) for supplying coolant to the engine cylinder, **characterized in that,** the motorized water valve further comprises a brushless DC motor (BLDC) for driving said valve, and the electrical control unit (ECU) controls the ON and OFF condition of the motorized valve, whereby during ON condition the said main flow port remains close and said bypass port remains open for supplying coolant to the engine cylinder whereas during OFF condition said main flow port remains open and said bypass port remains close, the electrical control unit (ECU) being able to place the motorized water valve in intermediary conditions, with both the main flow port and the bypass port closed or opened simultaneously.

2. The automatic temperature control device as claimed in claim 1, wherein the electrical control unit (ECU) controls the rotation of the valve by using Pulse Width Modulation (PWM) interface in the motorized water valve.

3. The automatic temperature control device as claimed in claim 2, wherein the said water valve is used to cool the engine cylinder in a condition of high temperature as well as to heat the engine cylinder in condition of cold by precisely controlling through the electrical control unit (ECU) command.

4. The automatic temperature control device as claimed in claim 3, wherein the mixing of hot and cold water on the output pipe depends on the equivalent voltage applied on it.

5. The automatic temperature control device as claimed in claim 4, wherein the opening of valve can be customized as per requirement and the system works as a control valve/Progressive valve.

6. A method of automatic temperature control in an internal combustion engine with the device of any preceding claims, **characterized in that** the method comprises the steps of:
a. opening both main flow port (8a) and bypass port (7a) for a period long enough to mix the hot and cold water when the engine cylinder is started cold;
b. closing both ports;
c. monitoring the engine cylinder operating condition and/or the coolant temperature; and
d. closing the main flow port (8a) if the engine cylinder operating condition exceeds a pre-set level; or
e. opening the bypass port (7a) if the coolant temperature exceeds a threshold value.

## Patentansprüche

1. Automatische Temperatursteuervorrichtung für einen Verbrennungsmotor, umfassend:
einen Motorzylinder;
eine elektrische Steuereinheit (ECU); und
ein elektromotorbetriebenes Wasserventil, das durch die elektrische Steuereinheit (ECU) angetrieben wird, wobei das elektromotorbetriebene Wasserventil verwendet wird, um die Temperatur des Motorzylinders zu steuern, wobei das elektromotorbetriebene Wasserventil eine nicht-magnetische Gehäuseanordnung (18), eine an der Gehäuseanordnung (18) befestigte Rotorabdeckungsanordnung (4) sowie eine die Rotorabdeckungsanordnung (4) und einen O-Ring-Einsatz (17) zur Abdichtung nach außen umfassende elektromagnetische Anordnung umfasst,
wobei die Rotorabdeckungsanordnung (4) einen Einlassstutzen (6a), einen Hauptströmungsstutzen (8a) und einen Umgehungsstutzen (7a) umfasst, um dem Motorzylinder ein Kühlmittel zuzuführen,
**dadurch gekennzeichnet, dass** das elektromotorbetriebene Wasserventil ferner einen bürstenlosen Gleichstrommotor (BLDC) zum Antreiben des Ventils umfasst und die elektrische Steuereinheit (ECU) den EIN- und AUS-Zustand des elektromotorbetriebenen Ventils steuert,
wobei während des EIN-Zustands der Hauptströmungsstutzen geschlossen bleibt und der Umgehungsstutzen offen bleibt, um dem Motorzylinder Kühlmittel zuzuführen,
wohingegen während des AUS-Zustands der Hauptströmungsstutzen offen bleibt und der Umgehungsstutzen geschlossen bleibt, wobei die elektrische Steuereinheit (ECU) dazu fähig ist, das elektromotorbetriebene Wasserventil in Zwischenzustände zu versetzen, in denen sowohl der Hauptströmungsstutzen als auch der Umgehungsstutzen gleichzeitig geschlossen oder geöffnet sind.

2. Automatische Temperatursteuervorrichtung nach Anspruch 1, wobei die elektrische Steuereinheit (ECU) die Drehung des Ventils durch Verwendung einer Impulsbreitenmodulation-(PWM-)Schnittstelle im elektromotorbetriebenen Wasserventil steuert.

3. Automatische Temperatursteuervorrichtung nach Anspruch 2, wobei das Wasserventil verwendet wird, um durch präzises Steuern mittels Anweisung der elektrischen Steuereinheit (ECU) den Motorzylinder in einem Zustand hoher Temperatur zu kühlen sowie den Motorzylinder in einem Zustand der Kälte zu heizen.

4. Automatische Temperatursteuervorrichtung nach Anspruch 3, wobei das Gemisch aus heißem und kaltem Wasser im Auslassrohr von der an ihr anliegenden Äquivalentspannung abhängt.

5. Automatische Temperatursteuervorrichtung nach Anspruch 4, wobei die Öffnung des Ventils bedarfsangepasst werden kann und das System als Steuerventil/Progressivventil fungiert.

6. Verfahren zur automatischen Temperatursteuerung in einem Verbrennungsmotor mit der Vorrichtung nach einem der vorangegangenen Ansprüche, **dadurch gekennzeichnet, dass** das Verfahren die folgenden Schritte umfasst:
a. Öffnen sowohl des Hauptströmungsstutzens (8a) als auch des Umgehungsstutzens (7a) für einen Zeitraum, der lang genug ist, um das heiße und das kalte Wasser zu vermischen, wenn der Motorzylinder kaltgestartet wird;
b. Schließen beider Stutzen;
c. Überwachen des Betriebszustands des Motorzylinders und/oder der Kühlmitteltemperatur; und
d. Schließen des Hauptströmungsstutzens (8a), falls der Betriebszustand des Motorzylinders einen voreingestellten Pegel übersteigt; oder
e. Öffnen des Umgehungsstutzens (7a), falls die Kühlmitteltemperatur einen Schwellenwert übersteigt.

## Revendications

1. Dispositif automatique de règlement de température pour un moteur à combustion interne, comprenant :
un cylindre moteur ;
une unité de commande électrique (ECU) ; et une soupape à eau motorisée, entrainée par l'unité de commande électrique (ECU),
la soupape à eau motorisée étant utilisée pour commander la température du cylindre moteur,
la soupape à eau motorisée comprenant
un assemblage (18) de boîtier non-magnétique,
un assemblage (4) de carter du rotor, attaché à l'assemblage (18) de boîtier, et
un assemblage électromagnétique, comprenant l'assemblage (4) de carter du rotor et un joint torique (17) à insertion pour assurer l'étanchéité extérieure,
l'assemblage de carter du rotor comprenant un raccord d'entrée (6a), un raccord d'écoulement principal (8a) et un raccord de contournement (7a) pour amener du réfrigérant au cylindre moteur,
**caractérisé en ce que**
la soupape à eau motorisée comprend, de plus, un moteur à courant continu sans balais (BLDC) pour entraîner ladite soupape, et **en ce que**
l'unité de commande électrique (ECU) commande l'état MARCHE/ARRET de la soupape motorisée,
ledit raccord d'écoulement principal restant fermé et ledit raccord de contournement restant ouvert pour amener du réfrigérant au cylindre moteur dans l'état MARCHE et
ledit raccord d'écoulement principal restant ouvert et le raccord de contournement restant fermé dans l'état ARRET, l'unité de commande électrique (ECU) étant apte à placer la soupape à eau motorisée dans des états intermédiaires, dans lesquels le raccord d'écoulement principal et le raccord de contournement sont fermés ou ouverts simultanément.

2. Dispositif automatique de règlement de température selon la revendication 1, l'unité de commande électrique (ECU) réglant la rotation de la soupape en utilisant une interface de modulation de largeur d'impulsion (PWM) dans la soupape à eau motorisée.

3. Dispositif automatique de règlement de température selon la revendication 2, la soupape à eau étant utilisée pour refroidir le cylindre moteur dans un état de température élevée, ainsi que pour réchauffer le cylindre moteur dans un état à froid, notamment par des commandes précises de l'unité de commande électrique (ECU).

4. Dispositif automatique de règlement de température selon la revendication 3, le mélange d'eau chaude et d'eau froide dans le conduit d'évacuation dépendant de la tension équivalente appliquée sur celui-ci.

5. Dispositif automatique de règlement de température selon la revendication 4, l'ouverture de la soupape pouvant être adaptée selon les besoins et en ce que le système fonctionne comme une soupape de régulation/soupape à ouverture progressive.

6. Procédé de règlement de température automatique dans un moteur á combustion interne par un dispositif selon l'une quelconque des revendications précédentes, **caractérisé en ce que** le procédé comprend les étapes suivantes :
a. ouverture du raccord d'écoulement principal (8a) et du raccord de contournement (7a) pour une période assez longue permettant de mélanger l'eau chaude et l'eau froide, lorsque le cylindre moteur est démarré à froid ;
b. fermeture des deux raccords ;
c. surveillance de l'état de fonctionnement du cylindre moteur et/ou de la température du réfrigérant ; et
d. fermeture du raccord d'écoulement principal (8a), lorsque l'état de fonctionnement du cylindre moteur est supérieur à un niveau prédéfini ; ou
e. ouverture du raccord de contournement (7a), lorsque la température du réfrigérant est supérieure à une valeur de seuil.
